# EUROPÄISCHE PATENTSCHRIFT

(11) **EP 0 614 728 B1**
(45) Veröffentlichungstag und Bekanntmachung des Hinweises auf die Patenterteilung: **27.08.1997**
(21) Anmeldenummer: 94102022.4
(22) Anmeldetag: 10.02.1994
(51) Int. Cl.: B25B 1/06, B25B 1/24, B23Q 1/28

(54) **Spannstock**
Vice
Etan

(30) Priorität: 06.03.1993 DE 4307055
(43) Veröffentlichungstag der Anmeldung: 14.09.1994
(73) Patentinhaber: HANDTMANN A-PUNKT AUTOMATION GMBH, D-88255 Baienfurt (DE)
(72) Erfinder: Strasser, Karl-Heinz, D-88276 Berg b. Ravensburg (DE)
(74) Vertreter: Engelhardt, Guido, Dipl.-Ing.

(56) Entgegenhaltungen:
- EP-A- 0 268 096
- FR-A- 898 674
- FR-A- 2 270 063
- SE-A- 432 553
- US-A- 3 786 721

## Beschreibung

Die Erfindung bezieht sich auf einen Spannstock zur Halterung eines Werkstückes mit zwei relativ zueinander verstellbaren Spannbacken, von denen der erste Spannbacken mit einem Träger für den zweiten Spannbacken versehen, dieser mittels eines Zwischengliedes begrenzt verschiebbar auf dem Träger gelagert und über eine in Richtung des ersten Spannbackens wirkende mittels einer Servoeinrichtung überdrückbaren Druckfeder an diesem abgestützt ist.

Durch die FR-A-2 270 063 ist ein Spannstock dieser Art bekannt. Bei der Maschine, bei der diese Spannstöcke eingesetzt werden, sind diese jedoch fest auf einem Arbeitstisch montiert, so daß eine seitliche Verstellung nicht vorgesehen ist.

Aufgabe der Erfindung ist es daher, einen Spannstock der eingangs genannten Gattung zu schaffen, der nicht nur einfach in seiner konstruktiven Ausgestaltung und somit wirtschaftlich zu fertigen ist, sondern der vor allem maschinell leicht geöffnet und in beliebigen Lagen in Längsrichtung eines einzuspannenden Werkstückes leicht verstellt werden kann. Ein Umsetzen eines Werkstückes soll demnach in kurzer Zeit zu bewerkstelligen sein, so daß ein automatischer Ablauf von Arbeitsvorgängen, ohne daß längere Rüstzeiten in Kauf zu nehmen sind, möglich ist. Der dazu erforderliche Bauaufwand soll gering gehalten werden, dennoch soll eine hohe Betriebssicherheit gegeben sein, so daß insbesondere stangenförmige Werkstücke optimal bearbeitet werden können. Des weiteren soll eine Anpassung an unterschiedlich zu bearbeitende Werkstücke ohne Schwierigkeiten vorgenommen werden können.

Gemäß der Erfindung wird dies bei einem Spannstock der vorgenannten Art dadurch erreicht, daß der Träger mit einem Verstellglied, beispielsweise einem verfahrbaren Schlitten, wahlweise koppelbar ist, wobei an dem Verstellglied zur Koppelung des Trägers mit dem Schlitten an diesem eine mit Keilflächen versehene Führungsschiene angebracht ist und der Träger zwei Klemmstücke aufweist, zwischen denen die Führungsschiene einspannbar ist.

Damit stets eine gute Anlage gewährleistet ist, sollte eines der Klemmstücke des Trägers als verdrehbar gelagerter Klemmbacken ausgebildet sein, der durch die Kraft einer Druckfeder mit der Führungsschiene des Verstellgliedes verspannbar ist, und der Klemmbacken sollte mit einem verdrehbar gelagerten die Klemmfläche bildenden Einsatzstück versehen sein.

Zum Lösen der Klemmverbindung zwischen dem Träger und dem Verstellglied ist es ferner angebracht, eine auf den verschwenkbar gelagerten Klemmbacken einwirkende durch ein Druckmedium beaufschlagbare Servoeinrichtung in Form einer Spannzange vorzusehen.

Zum gemeinsamen Überdrücken der den zweiten Spannbacken mehrerer Spannstöcke jeweils zugeordneten Druckfedern kann des weiteren eine in Richtung des Verstellgliedes wirkende Servoeinrichtung in Form einer verstellbar angeordneten Platte vorgesehen sein, die mittels eines oder mehrerer in einen Zylinder eingesetzter und von einem Druckmedium beaufschlagbarer Verstellkolben betätigbar ist.

Die Platte sollte hierbei über Hebel mit einem ortsfesten Bauteil nach Art eines Parallelogrammgestänges angelenkt sein, und die in mehreren in Längsrichtung der Platte geneigt angeordneten Zylindern eingesetzten Verstellkolben sollten jeweils im Bereich der Anlenkung eines Hebels an der Platte auf diesen einwirken.

Auch bei dieser Ausgestaltung sollte die Platte beim Überdrücken der den zweiten Spannbacken zugeordneten Druckfedern an den ersten Spannbacken der Spannstöcke abgestützt sein. Dies kann mittels eines der Platte zugeordneten verstellbaren Stützgliedes bewerkstelligt werden. das an den ersten Spannbacken der Spannstöcke anlegbar ist und als durch ein Druckmedium, vorzugsweise Druckluft, elastisch verformbare Schläuche oder dgl. ausgebildet sein kann.

Wird ein Spannstock gemäß der Erfindung ausgebildet, so ist es nicht nur möglich, den Spannstock an einer vorgegebenen Station zu öffnen, sondern dieser kann auch mit Hilfe eines Schlittens als Verstellglied verfahren werden, so daß eine optimale Bearbeitung eines eingespannten Werkstückes zu bewerkstelligen ist und weder eine Servoeinrichtung mitgeführt noch Energie während einer Lageänderung des Spannstockes diesem zugeführt werden muß. Ein Werkstück wird vielmehr durch die Kraft der auf den zweiten Spannbacken einwirkenden Druckfeder stets zuverlässig in dem Spannstock gehalten, dennoch kann dieser leicht durch Überdrücken der Druckfeder zum Einlegen eines Werkstückes oder zu dessen Entnahme geöffnet werden.

Des weiteren ist von Vorteil, daß ein oder mehrere Spannstöcke problemlos an einen Schlitten anzukoppeln und somit durch diesen zu verfahren sind. Die vorschlagsgemäß ausgebildeten Spannstöcke sind daher insbesondere zur Halterung von stangenförmigen Werkstücken geeignet, die zu einem Bearbeitungszentrum zu transportieren sind. Durch gemeinsames Öffnen aller erforderlichen Spannstöcke kann hierbei ein Werkstück in diese eingelegt und mittels des Schlittens dem Bearbeitungszentrum zugeführt werden. Da aber die Spannstöcke von dem Schlitten entkoppelt und auch einzeln geöffnet werden können, ist es ferner mit Hilfe der Steuerung des Bearbeitungszentrums ohne Schwierigkeiten und kurzfristig möglich, abgetrennte Werkstücksegmente zu vereinzeln und die Spannstöcke jeweils derart auf das Werkstück und/oder dessen Teile einwirken zu lassen, daß das Werkstück bzw. Werstücksegmente ungehindert an der vorgesehenen Stelle zu bearbeiten ist. Durch Verstellbewegungen des Schlittens, Öffnen der Klemmverbindungen zwischen den Spannstöcken und dem Schlitten sowie Öffnen der Spannstöcke, wobei die einzelnen Vorgänge aufeinander abgestimmt vorzunehmen sind, können nämlich abgetrennte Werkstückteile zueinander versetzt und die Positionen der Spannstöcke können verändert werden.

Der dazu erforderliche Bau- und Steuerungsaufwand ist gering, da die CNC-Achse des Bearbeitungszentrums als Arbeits- und Positionierachse für die Spannstücke mit verwendet werden. Ein Verschnitt sowie Ausschuß sind bei der in dieser Weise zu bewerkstelligenden Zuführung eines Werkstückes nicht in Kauf zu nehmen, auch werden Beschädigungen der Werkstücksegmente weitgehend vermieden. Und da keine manuellen Umsetzungen vorzunehmen sind, sind auch die Rüstzeiten äußerst kurz. Eine vielseitige Verwendbarkeit bei zuverlässiger Halterung des Werkstückes ist demnach gegeben.

In der Zeichnung ist ein Ausführungsbeispiel eines gemäß der Erfindung ausgebildeten Spannstockes dargestellt, das nachfolgend im einzelnen erläutert ist. Hierbei zeigen:
- Figur 1: den an einen Schlitten als Verstellglied angekoppelten Spannstock in Vorderansicht und teilweise im Schnitt,
- Figur 2: einen Ausschnitt aus Figur 1 bei überdrückter dem zweiten Spannbacken zugeordnete Druckfeder in einer vergrößerten Darstellung,
- Figur 3: einen Ausschnitt aus Figur 1 bei von dem Schlitten entkoppeltem Spannstock in einer vergrößerten Darstellung,
- Figur 4: eine mehreren Spannstöcken nach Figur 1 zu deren Öffnen zugeordnete Servoeinrichtung in Draufsicht
und
- Figur 5: einen Schnitt nach der Linie V-V der Figur 4.

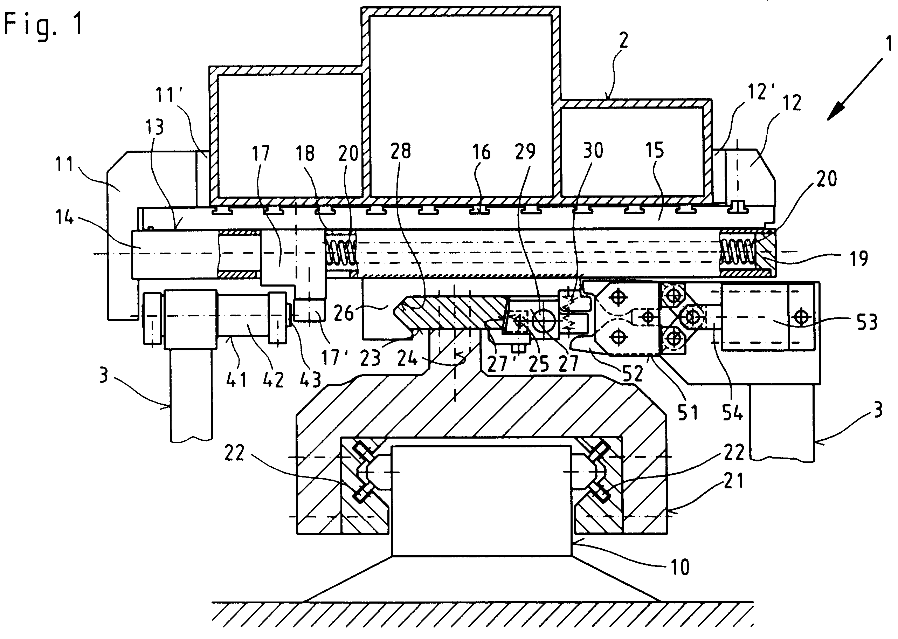

Der in Figur 1 dargestellte und mit 1 bezeichnete Spannstock dient zur Halterung eines Werkstückes 2 und besteht im wesentlichen aus einem ersten Spannbacken 11, einem an diesem befestigten Träger 13 sowie einem zweiten Spannbacken 12, der in Richtung des ersten Spannbacken 11 verstellbar ist. Dazu dient eine Druckfeder 20, die in einem den Träger 13 bildenden Rohrstück 14 eingesetzt, an diesem abgestützt ist und auf den zweiten Spannbacken 12 einwirkt. Zur Abstützung der Druckfeder 20 an dem Rohrstück 14 ist ein in dessen dem zweiten Spannbacken 12 zugekehrtes Ende eingesetzter Stopfen 19 vorgesehen. Die Abstützung der Druckfeder 20 an dem zweiten Spannbacken 12 wird mit Hilfe eines Ansatzstückes 17 bewerkstelligt, das an einer Auflageplatte 15 als Zwischenglied angebracht ist, die den zweiten Spannbacken 12 trägt. Die Auflageplatte 15 ist dazu mit mit Abstand zueinander angeordneten Nuten 16 ausgestattet, in die der zweite Spannbacken 12 je nach der Größe des einzuspannenden Werkstückes eingesetzt werden kann. Durch eine den ersten Spannbacken 11 durchgreifende Schraube 36, die in einer in das Rohrstück 14 eingesetzte Scheibe 35 eingeschraubt ist, ist dieses mit dem ersten Spannbacken 11 fest verbunden.

Das Ansatzstück 17 durchgreift das Rohrstück 14, in das dazu Längsschlitze 18 eingearbeitet sind. Die Spannkraft der Druckfeder 20 wird somit über das Ansatzstück 17 und die Auflageplatte 15 auf den zweiten Spannbacken 12, der wie auch der erste Spannbacken 11 mit auswechselbaren an das jeweils einzuspannende Werkstück angepaßte Einsätze 11' bzw. 12' versehen ist, übertragen. Das Werkstück 2 wird demnach durch die Kraft der Druckfeder 20 zwischen dem ersten und dem zweiten Spannbacken 11 bzw. 12 gehalten.

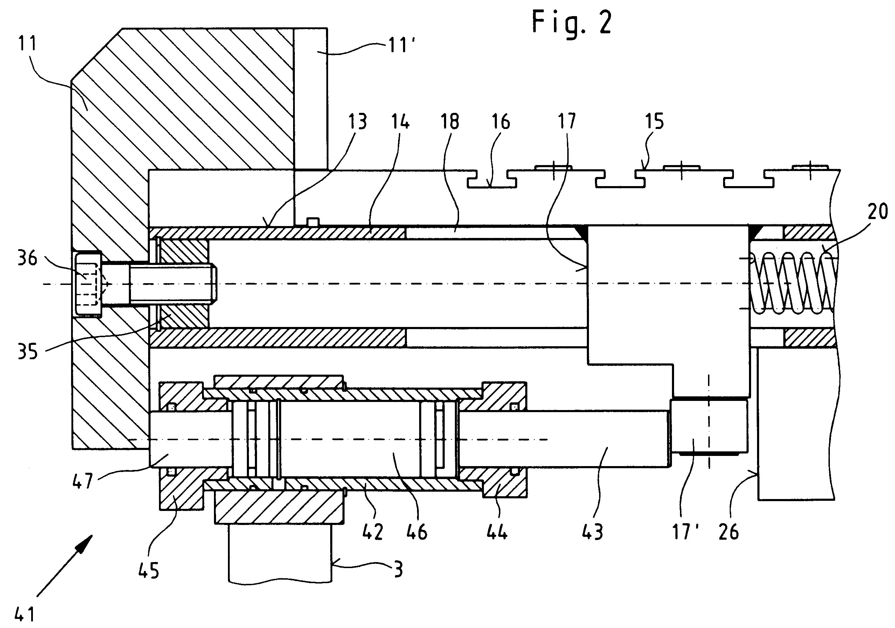

Zum Öffnen des Spannstockes 1 ist, wie dies insbesondere der Figur 2 zu entnehmen ist, eine Servoeinrichtung 41 in Form eines in einen durch zwei Deckel 44 und 45 verschlossenen Zylinder 42 eingesetzter Kolben 43 vorgesehen. Der den Deckel 44 durchgreifende Kolben 43 wirkt bei einem Druckaufbau im Druckraum 46 in der in Figur 2 gezeigten Betriebsstellung auf eine an dem Ansatzstück 17 befestigte Rolle 17' ein, so daß das Ansatzstück 17 nach rechts verschoben und dadurch die Druckfeder 20 überdrückt wird. Der zweite Spannbacken 12 ist dadurch von dem Werkstück 2 abgehoben, so daß dieses dem Spannstock 1 entnommen werden kann.

Um die Kraft zum Überdrücken der Druckfeder 20 nicht in einem Gestell 3, das die Servoeinrichtung 41 trägt, aufnehmen zu müssen, ist deren Druckraum 46 durch einen den Deckel 45 durchgreifenden Stützkolben 47 begrenzt. Bei einem Druckaufbau in dem Druckraum 46 wird der Stützkolben 47 nach links verschoben und an dem ersten Spannbacken 11 angelegt, die von der Servoeinrichtung 41 aufgebrachte Kraft wird demnach in dem Träger 13 abgestützt.

Der Spannstock 1 ist, um dessen Lage verändern zu können, mit einem Schlitten 21 als Verstellglied wahlweise koppelbar. Dazu sind zwei an dem Träger 13 angebrachte Klemmstücke 26 und 27 vorgesehen, die mit einer auf dem Schlitten 21 mittels Schrauben 24 befestigten in eine in das Klemmstück 26 eingearbeitete keilförmige Nut 28 eingesetzte Führungsschiene 23 koppelbar sind. Der Schlitten 21 ist hierbei mittels Rollen 22 auf einer ortsfest angeordneten Tragschiene 10 abgestützt.

Das Klemmstück 27 ist bei dem gezeigten Ausführungsbeispiel als Klemmbacken ausgebildet, der mittels eines Bolzens 29 verschwenkbar gelagert ist, und zwar durch die Kraft einer durch einen Zapfen 31 geführten Druckfeder 30, die an dem an dem Träger 13 angebrachten Klemmstück 26 abgestützt ist. Und um stets eine flächige Anlage des Klemmstückes 27 mit der Klemmfläche 27' an der Klemmfläche 25 der Führungsschiene 23 sicherzustellen, ist in dem Klemmstück 27 ein Einsatzstück 32 auf einem Bolzen 33 verschwenkbar gelagert. Durch ein Gegenlager 34, das die Führungsschiene 23 hintergreift, ist ausgeschlossen, daß der Spannstock 1 ungewollt von dieser abgenommen werden kann.

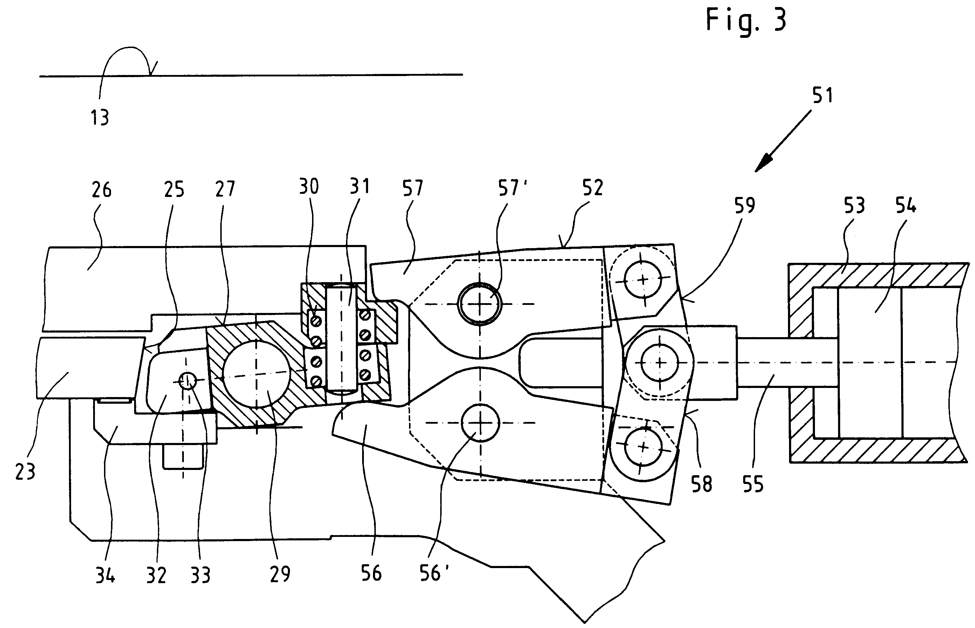

Zum Öffnen der selbsttätig schließenden Klemmverbindung zwischen dem Träger 13 des Spannstockes 1 und dem Schlitten 21 dient wiederum eine Servoreinrichtung 51, die aus einer Spannzange 52 sowie einen in einen Zylinder 53 eingesetzten und von einem Druckmedium beaufschlagbaren Verstellkolben 54 besteht. Über an der Kolbenstange 55 des Verstellkolbens 54 angelenkte Hebel 58 und 59 wirkt dieser auf die beiden auf Bolzen 56' bzw. 57' verschwenkbar gelagerte Verstellhebel 56 und 57 der Spannzange 52 ein. Der Verstellhebel 57 ist hierbei, wie dies in Figur 3 gezeigt ist, an dem Klemmstück 26 abgestüzt, durch den Verstellhebel 56 wird dagegen das Klemmstück 57 bei einer Beaufschlagung des Verstellkolbens 54 verschwenkt, so daß das Einsatzstück 32 von der Klemmfläche 25 der Führungsschiene 23 abgehoben und der Schlitten 21 in dieser Betriebsstellung verfahren werden kann, ohne daß der Spannstock 1 und das in diesem eingespannte Werkstück 2 mitgenommen werden.

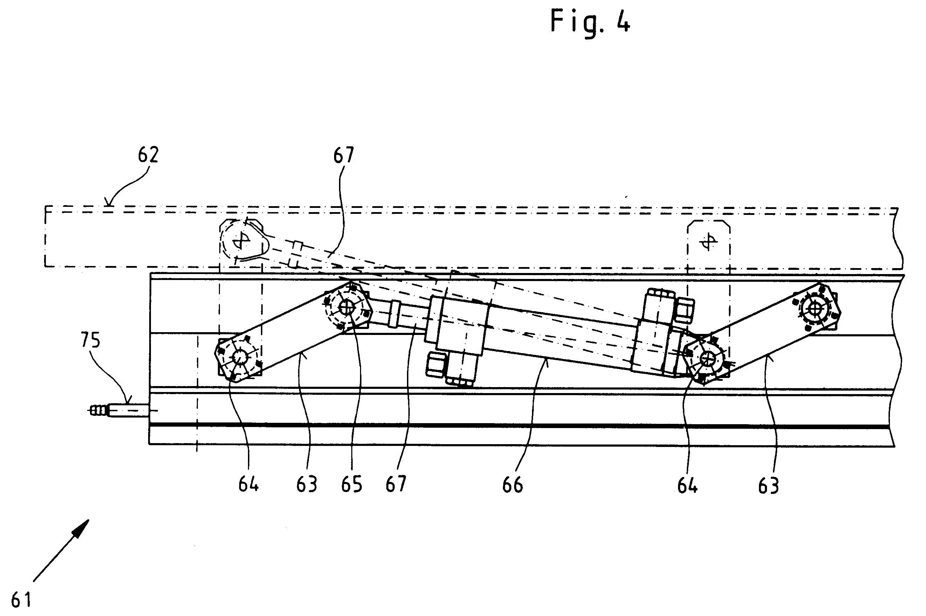

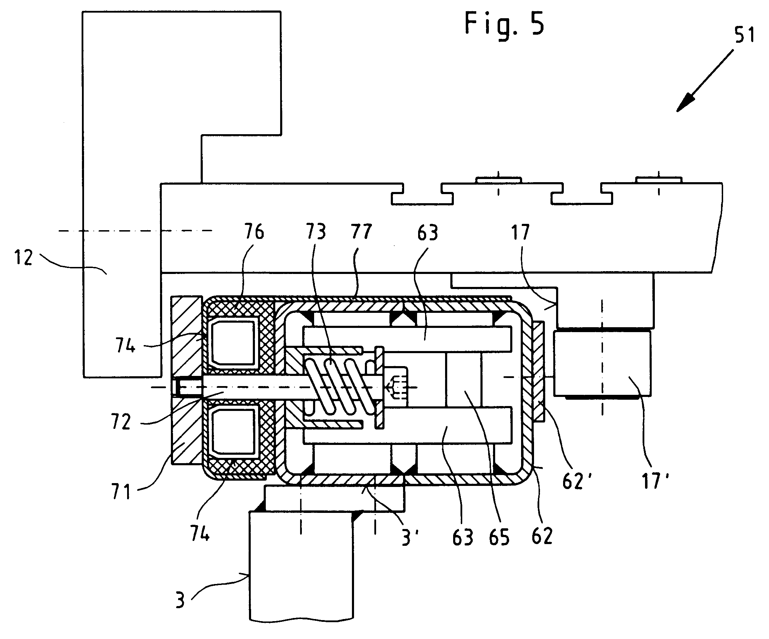

Um mehrere auf dem Schlitten 21 angeordnete Spannstöcke 1 zum Einlegen eines Werkstückes gleichzeitig öffnen zu können, ist eine weitere in den Figuren 4 und 5 dargestellte Servoeinrichtung 61 vorgesehen, die aus einer in Richtung der an den Ansatzstücken 17 angebrachten Rollen 17' verstellbaren U-förmigen Platte 62 und mehreren in Zylindern 66 eingesetzte von einem Druckmedium beaufschlagbare Verstellkolben 67 besteht. Der Zylinder 66 ist hierbei in Längsrichtung der Platte 62 geneigt angeordnet und mittels Bolzen 64 an dem Gestell 3 abgestützt, die Verstellkolben 67 wirken auf nach Art eines Parallelogrammgestänges angeordnete Hebel 63 ein, die mittels der Bolzen 64 an dem Gestell 3 und mittels Bolzen 65 an der Platte 62 gelenkig befestigt sind. Alle im Wirkungsbereich der Platte 62 befindlichen Spannstöcke 1 können somit bei einer entsprechenden Verstellung der Platte 62 gemeinsam geöffnet werden.

Damit die dabei auftretenden Kräfte nicht von dem Gestell 3 aufzunehmen sind, ist der Platte 62 ein Stützglied 71 zugeordnet, das beim Überdrücken der Druckfedern 20 der Spannstöcke 1 an deren ersten Spannbacken 11 anlegbar ist. Zur Verstellung des Stützgliedes 71 in Richtung der Spannbacken 11 sind, wie dies der Figur 5 zu entnehmen ist, zwei von einem Druckmedium, beispielsweise Luft, beaufschlagbare Schläuche 74 vorgesehen, denen das Druckmedium über eine Anschlußleitung 75 zuführbar ist.

Durch Aufblasen der Schläuche 74 wird somit das Stützglied 71 entgegen der Kraft einer auf einem mit diesem verbundenen Bolzen 72 einwirkenden zur Rückführung vorgesehenen Feder 74 an den ersten Spannbacken 11 der Spannstöcke 1 angelegt, so daß die von der Servoeinrichtung 61 aufgebrachte Kraft in dem Träger 13 abgestützt wird. Zum Schutz vor Verschmutzung einer die Schläuche 74 aufnehmenden Ummantelung 76 ist auf diesen ein U-förmig gestaltetes Schutzblech 77 lose aufgesteckt, das zusammen mit dem Stützglied 71 verstellbar ist.

## Patentansprüche

1. Spannstock (1) zur Halterung eines Werkstückes (2) mit zwei relativ zueinander verstellbaren Spannbacken (11, 12), von denen der erste Spannbacken (11) mit einem Träger (13) für den zweiten Spannbacken (12) versehen, dieser mittels eines Zwischengliedes (15) begrenzt verschiebbar auf dem Träger (13) gelagert und über eine in Richtung des ersten Spannbackens (11) wirkende mittels einer Servoeinrichtung (41 bzw. 61) überdrückbaren Druckfeder (20) an diesem abgestützt ist,
**dadurch gekenzeichnet,**
daß der Träger (13) mit einem Verstellglied (21), beispielsweise einem verfahrbaren Schlitten, wahlweise koppelbar ist, wobei an dem Verstellglied (21) zur Koppelung des Trägers (13) mit dem Verstellglied (21) eine mit Keilflächen (25, 25') versehene Führungsschiene (23) angebracht ist und der Träger (13) zwei Klemmstücke (26, 27) aufweist zwischen denen die Führungsschiene (23) einspannbar ist.

2. Spannstock nach Anspruch 1,
**dadurch gekennzeichnet,**
daß eines der Klemmstücke (27) des Trägers (13) als verdrehbar gelagerter Klemmbacken ausgebildet ist, der durch die Kraft einer Druckfeder (30) mit der Führungsschiene (23) des Verstellgliedes (21) verspannbar ist.

3. Spannstock nach Anspruch 2,
**dadurch gekennzeichnet,**
daß der Klemmbacken (27) mit einem verdrehbar gelagerten die Klemmfläche bildenden Einsatzstück (32) versehen ist.

4. Spannstock nach einem oder mehreren der Ansprüche 1 bis 3,
**dadurch gekennzeichnet,**
daß zum Lösen der Klemmverbindung zwischen dem Träger (13) und dem Verstellglied (21) eine auf den verschwenkbar gelagerten Klemmbacken (27) einwirkende durch ein Druckmedium beaufschlagbare Servoeinrichtung (51) in Form einer Spannzange (52) vorgesehen ist.

5. Spannstock nach einem oder mehreren der Ansprüche 1 bis 4,
**dadurch gekennzeichnet,**
daß zum gemeinsamen Überdrücken der den zweiten Spannbacken (12) mehrerer Spannstöcke (1) jeweils zugeordneten Druckfedern (20) eine in Richtung des Verstellgliedes (21) wirkende Servoeinrichtung (61) in Form einer verstellbar angeordneten Platte (62) vorgesehen ist, die mittels eines oder mehrerer in Zylindern (66) eingesetzter und von einem Druckmedium beaufschlagbarer Verstellkolben (67) betätigbar ist.

6. Spannstock nach Anspruch 5,
**dadurch gekennzeichnet,**
daß die Platte (62) über Hebel (63) an einem ortsfesten Bauteil (3) nach Art eines Parallelogrammgestänges angelenkt ist und daß die in mehreren in Längsrichtung der Platte (62) geneigt angeordneten Zylindern(66) eingesetzten Verstellkolben (67) jeweils im Bereich der Anlenkung eines Hebels (63) an der Platte (62) auf diesen einwirken.

7. Spannstock nach Anspruch 5 oder 6,
**dadurch gekennzeichnet,**
daß die Platte (62) beim Überdrücken der den zweiten Spannbacken (12) zugeordneten Druckfedern (20) an den ersten Spannbacken (11) der Spannstöcke (1) abgestützt ist.

8. Spannstock nach Anspruch 7,
**dadurch gekennzeichnet,**
daß zur Abstützung der Platte (62) dieser ein verstellbares Stützglied (71) zugeordnet ist, das an den ersten Spannbacken (12) der Spannstöcke (1) anlegbar ist.

9. Spannstock nach Anspruch 8,
**dadurch gekennzeichnet,**
daß zum Anlegen des entgegen der Kraft von Federn (73) verstellbaren Stützgliedes (71) eine oder mehrere durch ein Druckmedium, vorzugsweise Druckluft, elastisch verformbare Schläuche (74) oder dgl. vorgesehen sind.

## Claims

1. Vice (1) for holding a workpiece (2) with two chuck jaws (11, 12) which can be moved in relation to one another, with the first chuck jaw (11) having a carrier (13) for the second chuck jaw (12) and this after being mounted on the carrier (13) in such a way as to allow it to move within limits by means of an adapter (15) and supported on it by a compression spring (20) acting in the direction of the first chuck jaw (11) with the possibility of pressing over the compression spring (20) using a servo device (41 or 61),
**characterised in that,**
the carrier (13) can optionally be linked to an adjuster (21), for example a moving slide, there being a guide rail (23) fitted with wedge-shaped surfaces (25, 25') attached to the adjuster (21) in order to connect the carrier (13) to the adjuster (21), and the carrier (13) having two clamping pieces (26, 27) between which the guide rail (23) can be clamped.

2. Vice in accordance with Claim 1,
**characterised in that,**
one of the clamping pieces (27) of the carrier (13) is formed as a chuck jaw in a rotating mount and can be clamped against the guide rail (23) of the adjuster (21) by the force of a compression spring (30).

3. Vice in accordance with Claim 2,
**characterised in that,**
the chuck jaw (27) is provided with an insert (32) which is in a rotating mounting and forms the clamping surface.

4. Vice in accordance with one or more of Claims 1 to 3,
**characterised in that,**
a servo device (51) to which a pressurised medium can be applied and taking the form of a collet (52) is provided in order to release the clamped connection between the carrier (13) and the adjuster (21) by acting on the chuck jaw (27) in its swivelling mounting.

5. Vice in accordance with one or more of Claims 1 to 4,
**characterised in that,**
a servo device (61) acting in the direction of the adjuster (21) and taking the form of a plate (62) in an adjustable arrangement is provided in order to press over all the compression springs (20) assigned to each of the second chuck jaws (12) of several vices (1), with it being possible to activate the servo device (61) using one or more adjusting pistons (67) inserted in cylinders (66) and pressurised by a pressurised medium.

6. Vice in accordance with Claim 5,
**characterised in that,**
the plate (62) is articulated on a fixed part (3) by means of levers in the form of a parallelogram linkage, and that each of the adjusting pistons (67) inserted in several cylinders (66) aligned in the longitudinal direction of the plate (62) acts on a lever (63) in the area of the articulation point of the lever (63) on the plate (62).

7. Vice in accordance with Claim 5 or Claim 6,
**characterised in that,**
the plate (62) is supported against the first chuck jaw (11) of the vices (1) when pressing across the compression springs (20) assigned to the second chuck jaw (12).

8. Vice in accordance with Claim 7,
**characterised in that,**
an adjustable support (71) is assigned to the plate (62) in order to support it and the support (71) can be placed against the first chuck jaw (12) of the vices (1).

9. Vice in accordance with Claim 8,
**characterised in that,**
one or more hoses (74) or similar which can be flexibly deformed by a pressurised medium, preferably compressed air, are provided in order to apply the force acting against the springs (73) of an adjustable support (71).

## Revendications

1. Bloc de serrage (1) pour le retient d'une pièce à usiner (2), avec deux mors de serrage (11, 12) déplaçantes l'un par rapport à l'autre, dont le premier mors de serrage (11) comporte un support (13) pour le deuxième mors de serrage (12), ce dernier se laissant déplacer dans certaines limites, au moyen d'un élément intermédiaire (15), sur le support (13), et étant appuyé sur celui-ci au moyen d'un ressort de pression (20) pontable comprimé par un équipement servo (41 ou 61) et agissant en direction du premier mors de serrage (11),
**caractérisé en ce que**
le support (13) se laisse accoupler à un élément de réglage (21), p.ex. un chariot mobile, l'élément de réglage (21) comportant une glissière de guidage (23) munie de faces obliques (25, 25') pour le couplage du support (13) avec l'élément de réglage (21), et que le support (13) est équipé de deux pièces de serrage (26, 27) entre lesquelles se laisse serrer la glissière de guidage (23).

2. Bloc de serrage d'après la revendication 1,
**caractérisé en ce que**
une des pièces de serrage (27) du support (13) est conçue sous la forme d'un mors de serrage pivotant et serré par la force d'un ressort de pression (30) sur la glissière de guidage (23) de l'élément de réglage (21).

3. Bloc de serrage d'après la revendication 2,
**caractérisé en ce que**
le mors de serrage (27) est équipé d'un élément inséré (32) pivotant et formant la face de serrage.

4. Bloc de serrage d'après une ou plusieurs des revendications 1 à 3,
**caractérisé en ce que**
pour le détachement de la jonction par serrage entre le support (13) et l'élément de réglage (21), il est prévu un équipement servo (51) sous la forme d'une pince de serrage (52) soumis à l'action d'un milieu sous pression et agissant sur le mors de serrage pivotant (27).

5. Bloc de serrage d'après une ou plusieurs des revendications 1 à 4,
**caractérisé en ce que**
pour le pontage commun des ressorts de pression (20) assignés respectivement au deuxième mors de serrage (12) de plusieurs blocs de serrage (1), il est prévu un équipement servo (61) sous la forme d'une plaque à disposition variable (62) et agissant en direction de l'élément de réglage (21) et actionné par un ou par plusieurs pistons de réglage (67) insérés dans des cylindres (66) et soumis à l'action d'un milieu sous pression.

6. Bloc de serrage d'après la revendication 5,
**caractérisé en ce que**
la plaque (62) est articulée au moyen d'un levier (63) sur un organe stationnaire (3) sous la forme d'un tringlerie en parallélogramme et que les pistons de réglage (67), insérés dans plusieurs cylindres (66) inclinés en direction longitudinale de la plaque (62), agissent sur celle-ci respectivement aux endroits de l'articulation d'un levier (63) sur la plaque (62).

7. Bloc de serrage d'après la revendication 5 ou 6,
**caractérisé en ce que**
lors du pontage des ressorts de pression (20) assignés au deuxième mors de serrage (12), la plaque (62) s'appuie sur les premiers mors de serrage (12) des blocs de serrage (1).

8. Bloc de serrage d'après la revendication 7,
**caractérisé en ce que**
pour l'appui de la plaque (62) il lui est assigné un organe d'appui réglable (71) qui se laisse appliquer sur les premiers mors de serrage (12) des blocs de serrage (1).

9. Bloc de serrage d'après la revendication 8,
**caractérisé en ce que**
pour l'application de l'organe d'appui réglable (71) agissant contre la force de ressorts (73), il est prévu un ou plusieurs tuyaux flexibles (74) ou des moyens semblables, qui se laissent déformer de manière élastique au moyen d'un milieu sous pression, de préférence de l'air comprimé.
